# FASCICULE DE BREVET EUROPEEN

(11) **EP 4 370 406 B1**
(45) Date de publication et mention de la délivrance du brevet: **05.03.2025**
(21) Numéro de dépôt: 22744242.3
(22) Date de dépôt: 15.06.2022
(51) Int. Cl.: B62D 25/12

(54) **SUPPORT D'AILE AVANT D'UN VÉHICULE AUTOMOBILE**
FRONTFLÜGELTRÄGER EINES KRAFTFAHRZEUGS
FRONT WING BRACKET OF A MOTOR VEHICLE

(30) Priorité: 15.07.2021 FR 2107665
(43) Date de publication de la demande: 22.05.2024
(73) Titulaire: Stellantis Auto SAS, 78300 Poissy (FR)
(72) Inventeur: GOURVENNEC, Thibault, 91210 Draveil (FR); PERON, Rodolphe, 95220 Herblay (FR); DAROWNY, Fabrice, 91290 La Norville (FR)
(74) Mandataire: BCIP
(86) Numéro de dépôt international: PCT/FR2022/051164
(87) Numéro de publication internationale: WO 2023/285741

(56) Documents cités:
- WO-A1-2007/116145
- FR-A1- 2 844 499
- JP-U- S56 106 976

## Description

La présente invention revendique la priorité de la demande française 2107665 déposée le 15 juillet 2021.

L'invention a trait à une structure avant d'un véhicule automobile, et en particulier à un support d'aile avant de véhicule qui peut être monté sur une structure avant d'un véhicule automobile.

Le moteur d'un véhicule automobile est généralement protégé par un capot. Afin d'accéder au moteur, le capot doit être placé en une position ouverte et il est pratique de pouvoir faire en sorte que le capot reste en cette position. Dès lors, le capot comprend un organe de maintien (par exemple, une béquille) qui peut être déployé sur une interface au niveau de la caisse du véhicule de sorte à soutenir le capot en position ouverte.

De manière classique, une béquille de capot fixée au capot par une de ses extrémités est déployée afin que son extrémité libre vienne s'accrocher dans une interface fixée à la caisse du véhicule.

D'autres configurations sont possibles, par exemple, le document FR 2 945 504 décrit l'utilisation d'une trappe comme organe de maintien du capot en position ouverte. La trappe est conçue pour être déplacée. Lorsque le capot est en position fermée, la trappe peut être rangée sous le capot par clipsage.

Ces différentes façons de maintenir un capot de moteur en position ouverte nécessitent l'utilisation d'une pièce pour recevoir l'organe de maintien. Au-delà du fait qu'il est nécessaire de fabriquer cette pièce, il faut en plus la fixer à la structure du véhicule ou bien créer un espace de rangement, ce qui nécessite des moyens de fixation supplémentaires, comme par exemple des points de soudure et/ou des moyens de clipsage. Ces étapes supplémentaires dans la conception d'un véhicule prennent un certain temps et peuvent ainsi engendrer des coûts supplémentaires.

A cet égard, le document JPS56106976U divulgue un support d'aile avant de véhicule automobile présentant la combinaison des caractéristiques du préambule de la revendication 1.

L'invention a pour objectif de répondre à au moins un des problèmes ou inconvénients rencontrés dans l'art antérieur. En particulier, l'invention a pour objectif de simplifier la conception du véhicule automobile.

A cet effet et selon un premier aspect, l'invention a pour objet un support d'aile avant d'un véhicule automobile, ledit support comprenant une partie supérieure munie de moyens de fixation à une aile avant dudit véhicule et une partie inférieure munie de moyens de fixation à une partie de structure du véhicule, la partie supérieure étant reliée à ladite partie inférieure par une paroi latérale, la paroi latérale montrant une face externe et une face interne, ledit support d'aile avant étant remarquable en ce que la paroi latérale montre une patte présentant un trou adapté pour maintenir une béquille du capot, ladite patte faisant saillie du côté de la face interne de la paroi latérale.

Comme on l'aura compris à la lecture de la définition qui vient d'en être donnée, l'invention propose de réaliser un support d'aile avant conçu pour maintenir une béquille de capot. En effet, dans la présente invention, une patte a été réalisée dans le support d'aile avant et la patte présente un trou adapté pour maintenir une béquille de capot dont l'extrémité libre comporte par exemple une agrafe ou un crochet. Le fait que le trou adapté pour maintenir une béquille de capot soit conçu dans une patte réalisée sur la paroi latérale du support d'aile avant permet de s'affranchir de l'utilisation d'interfaces ou de trappes proposant un tel trou. Un véhicule automobile présentant un tel support d'aile avant est donc dépourvu à cet endroit d'une pièce supplémentaire. Aussi, grâce au support d'aile avant de l'invention, il n'est pas nécessaire d'utiliser des points de soudure ni d'utiliser des moyens de clipsage qui auraient été nécessaires pour d'autres types d'interface.

L'invention permet également d'alléger le véhicule automobile par rapport aux véhicules classiques, car aucune pièce supplémentaire n'est rajoutée pour maintenir la béquille du capot du moteur. Il est utile de rappeler ici que la conception actuelle de véhicule à motorisation de type électrique a pour objectif de réduire la masse des véhicules pour permettre aux batteries de propulsion de gagner en autonomie et que chaque allègement de la structure des véhicules permet d'avancer en ce sens.

Selon une mise en oeuvre préférée de l'invention, la patte est une découpe dans la paroi latérale et/ou est venue de manière avec la paroi latérale.

Par exemple, la patte est une découpe dans la paroi latérale et pliée de façon à montrer une ligne de pli. De préférence, la patte est pliée de façon à montrer une ligne de pli verticale. Le fait que la patte soit pliée de façon à montrer une ligne de pli verticale est la mise en oeuvre la plus pratique de l'invention car elle permet de supporter adéquatement les efforts engendrés par le poids du capot lorsque celui-ci est maintenu en position ouverte au travers de la béquille qui appuie sur ladite patte.

Avantageusement, la ligne de pli verticale montre au moins deux bulles de renforcement.

De préférence, la patte forme un angle compris entre 10° et 45° par rapport à la paroi latérale, plus préférentiellement compris entre 15° et 40° ou entre 20° et 35°.

De préférence encore, la patte montre une surface inférieure à l'étendue de l'ouverture associée à la patte.

Selon un mode de réalisation préféré de l'invention, la patte montre une extrémité proximale au niveau de la ligne de pli verticale et une extrémité distale disposée en face de la ligne de pli verticale. En d'autres termes, la patte montre une extrémité proximale au niveau de la ligne de pli verticale et une extrémité distale libre et l'extrémité proximale a une hauteur supérieure à la hauteur de l'extrémité distale. Avantageusement, la hauteur de la ligne de pli verticale est supérieure à la hauteur de l'extrémité distale. Autrement dit, la patte montre une forme biseautée.

Par exemple, la distance entre l'extrémité proximale au niveau de la ligne de pli verticale et l'extrémité distale est égale ou inférieure à la hauteur de l'extrémité distale.

De préférence, le trou adapté pour maintenir une béquille du capot et présenté par la patte est positionné plus proche de l'extrémité proximale au niveau de la ligne de pli verticale que de l'extrémité distale.

Avantageusement, l'extrémité distale est disposée en avant de ladite ligne de pli verticale. On comprend que cet agencement s'entend lorsque le support d'aile avant est monté sur le véhicule.

Par exemple, le support d'aile avant comprend en outre un moyen de fixation additionnel pour projecteur avant du véhicule et en ce que l'extrémité distale est disposée plus près dudit moyen de fixation additionnel que ne l'est l'extrémité proximale.

Selon un second aspect, l'invention concerne un véhicule automobile comprenant au moins un capot, ledit capot présentant une face intérieure et une face extérieure, la face intérieure dudit capot montrant une béquille avec une extrémité libre, l'extrémité libre de ladite béquille pouvant se trouver en une position repliée contre la face interne du capot lorsque celui-ci est en position fermée et pouvant se trouver dans une position déployée lorsque le capot est en position ouverte ; ledit véhicule est remarquable en ce qu'il comprend en outre au moins un support d'aile avant tel que défini selon le premier aspect.

De préférence, la patte montre une rigidité supérieure à la rigidité de la béquille.

De préférence, la patte montre une extrémité proximale formant une ligne de pli verticale avec la paroi latérale et la patte est agencée pour que l'extrémité distale soit disposée en avant de l'extrémité proximale.

De manière avantageuse, le véhicule automobile est un véhicule avec une motorisation électrique.

Selon un troisième aspect, l'invention concerne un procédé de fabrication d'un support d'aile avant d'un véhicule automobile selon le premier aspect, ledit procédé comprenant une étape de fourniture d'un support d'aile avant comprenant une partie supérieure munie de moyens de fixation à une aile avant dudit véhicule et une partie inférieure munie de moyens de fixation à une partie de structure du véhicule, la partie supérieure étant reliée à ladite partie inférieure par une paroi latérale, la paroi latérale montrant une face externe et une face interne, ledit procédé est remarquable en ce qu'il comprend en outre une étape de découpe à plat de la paroi latérale afin de former une patte et un trou dans ladite patte, le trou étant adapté pour maintenir une béquille du capot, suivi d'une étape d'emboutissage réalisée du côté de la face externe de la paroi latérale afin de plier ladite patte avec un trou de sorte à ce qu'elle fasse saillie du côté de la face interne de la paroi latérale.

Alternativement, ledit procédé est remarquable en ce qu'il comprend en outre une étape de découpage-pliage d'une patte dans la paroi latérale afin de former une patte pliée suivi d'une étape de formation d'un trou adapté pour maintenir une béquille du capot dans ladite patte pliée, l'étape de découpage-pliage étant réalisée du côté de la face externe de la paroi latérale afin de plier ladite patte de sorte à ce qu'elle fasse saillie du côté de la face interne de la paroi latérale.

L'invention sera bien comprise et d'autres aspects et avantages apparaîtront clairement à la lecture de la description qui suit donnée en référence aux figures annexées sur lesquelles :
[Fig. 1] La figure 1 montre une vue du profil de la face interne du support d'aile avant selon l'invention.
[Fig. 2] La figure 2 est une vue similaire à la figure 1, où le support d'aile avant selon l'invention est vu par l'avant du véhicule.

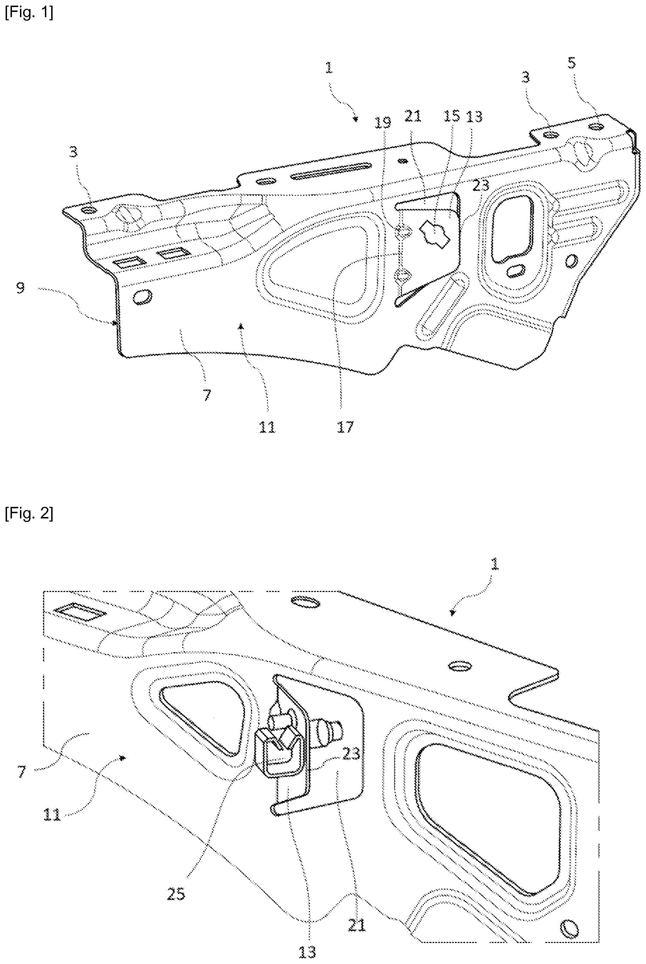

Dans la description qui suit, le terme « comprendre » est synonyme de « inclure » et n'est pas limitatif en ce qu'il autorise la présence d'autres éléments dans le support d'aile avant ou dans le véhicule auquel il se rapporte, ou d'autres étapes dans le procédé de fabrication. Il est entendu que le terme « comprendre » inclut les termes « consister en ». Les termes « inférieur » et « supérieur » s'entendront dans leur sens général, le terme « inférieur » désignant une proximité avec le sol plus importante. De même, les termes « avant » et « arrière » s'entendront par rapport à l'orientation générale du véhicule pris dans son sens normal de marche. Sur les différentes figures, les mêmes références désignent des éléments identiques ou similaires. Les figures 1 et 2 seront décrites conjointement.

Les figues montrent un support 1 d'aile avant d'un véhicule automobile. Le support 1 d'aile avant comprend une partie supérieure présentant des moyens de fixation 3 à une aile avant du véhicule. Le support 1 d'aile avant comprend aussi une partie inférieure présentant des moyens de fixation (non-visibles) à une partie de structure du véhicule, notamment une partie de la structure avant du véhicule. Une paroi latérale 7 relie la partie supérieure à la partie inférieure. La paroi latérale 7 montre une face externe 9 et une face interne 11. La face externe 9 de la paroi latérale 7 peut, comme montré sur la figure 1, s'étendre sous la partie supérieure du support 1 d'aile avant. La face interne tournée vers le bloc moteur disposé sous le capot.

Le support 1 d'aile avant selon l'invention est remarquable en ce que la paroi latérale 7 montre une patte 13 présentant un trou 15 adapté pour maintenir une béquille du capot (non-représentée). La figure 2 schématise l'insertion d'un crochet 25 de l'extrémité libre de la béquille du capot dans ledit trou 15. La patte 13 montrée par la paroi latérale 7 fait saillie du côté de la face interne 11 de la paroi latérale 7.

Un tel support 1 d'aile avant permet de concevoir des véhicules automobiles dépourvus d'interface pour supporter une béquille de capot lorsque celle-ci est position déployée et que le capot est en position ouverte. Il en résulte des véhicules qui sont plus simples à développer, car il n'est pas nécessaire de fabriquer une interface à partir d'une autre pièce puisqu'il suffit d'utiliser le support 1 d'aile avant. Comme l'interface est créée à partir du support 1 d'aile avant, aucune masse supplémentaire n'est rajoutée au véhicule, ce qui permet de ne pas alourdir la structure. Afin d'alléger encore plus la structure du véhicule, la surface de la patte 13 est inférieure à l'étendue de l'ouverture 21 qui est associée à la patte 13 et présente dans la paroi latérale 7.

Ainsi, avantageusement, la patte 13 est une découpe dans la paroi latérale 7 et/ou est venue de manière avec la paroi latérale 7.

Lorsque la patte 13 est une découpe dans la paroi latérale 7, il est préférable qu'elle soit pliée de façon à montrer une ligne de pli 17 verticale. En effet, comme la patte 13 permet de supporter le poids du capot via l'insertion de l'extrémité libre de la béquille dans le trou 15, l'effort subi par la patte 13 est orienté vers le bas et une ligne de pli 17 verticale et donc parallèle à l'effort permet d'offrir une résistance adéquate à cet effort. La description du support 1 d'aile avant selon l'invention continue ci-dessous en considérant que la patte 13 est une découpe pliée de façon à montrer une ligne de pli 17 verticale.

La ligne de pli 17 verticale peut avantageusement montrer au moins deux bulles 19 de renforcement, qui vont ainsi permettre de maintenir l'angle d'ouverture de la patte 13 par rapport à la paroi latérale 7. Par exemple, la patte 13 forme un angle compris entre 10° et 45° par rapport à la paroi latérale 7, plus préférentiellement compris entre 15° et 40° ou entre 20° et 35°. La création d'au moins une bulle 19 de renforcement, plus préférablement d'au moins deux bulles 19 de renforcement, permet à la patte 13 de résister correctement en cas d'effort subit latéralement, par exemple dans le cas de coup de vent lorsque l'extrémité libre de la béquille est en position déployée et est insérée dans le trou 15.

La patte 13 peut monter une extrémité proximale au niveau de la ligne de pli 17 verticale et une extrémité distale 23 disposée en face de la ligne de pli 17 verticale. L'extrémité distale 23 est disposée de manière préférentielle en avant de ladite ligne de pli 17 verticale. La hauteur de la ligne de pli 17 verticale est par exemple supérieure à la hauteur de l'extrémité distale 23, ce qui donne à la patte 13 une forme biseautée. La forme biseautée permet d'ajouter une résistance à l'effort subi par la patte 13. Comme montré sur les figures, la distance entre l'extrémité proximale au niveau de la ligne de pli 17 verticale et l'extrémité distale 23 peut être égale ou inférieure à la hauteur de l'extrémité distale 23.

Il est avantageux que le support 1 d'aile avant selon l'invention comprenne au moins un moyen de fixation additionnel 5 pour un projecteur avant de véhicule. De préférence, l'extrémité distale 23 libre de la patte 13 est disposée au plus près du ou des moyens de fixations additionnels 5 pour un projecteur de véhicule que ne l'est l'extrémité proximale. On comprend donc que l'extrémité distale 23 libre est disposée en avant de la ligne de pli 17.

Le trou 15 adapté pour maintenir une béquille du capot et présenté par la patte 13 est positionné plus proche de l'extrémité proximale au niveau de la ligne de pli 17 verticale que de l'extrémité distale 23. Cela permet à la patte de résister de manière appropriée aux efforts subis lorsque l'extrémité libre de la béquille du capot est maintenue par le trou 15.

Ainsi, un véhicule automobile comprend au moins un capot présentant sur sa face intérieure une béquille avec une extrémité libre se trouvant dans une position déployée et servant d'organe de maintien du capot lorsqu'il se trouve en position ouverte. En positon fermée, l'extrémité libre de la béquille se trouve dans une position repliée contre la face interne du capot. Afin de maintenir le capot en position ouverte, l'invention propose que le véhicule comprenne au moins un support 1 d'aile avant tel que défini plus haut.

On comprend bien que lorsque le capot est en position ouverte, l'extrémité libre de la béquille dans la position déployée est insérée dans le trou 15 adapté pour maintenir une béquille de capot et présenté par la patte 13. Cette configuration du véhicule selon l'invention ne fait pas intervenir de pièce supplémentaire qui devrait être rapportée à sa structure, ce qui permet d'optimiser la fabrication du véhicule (simplification dans la conception et pas d'alourdissement). Avantageusement, le véhicule comporte une motorisation de type électrique.

La patte 13 montre une rigidité supérieure à la rigidité de la béquille. En cas de contrainte trop importante, c'est la béquille qui va fléchir en premier, la patte étant plus résistante à l'effort car elle fait partie du support 1 d'aile avant.

Le procédé de fabrication d'un support 1 d'aile avant selon l'invention est également décrit ci-après. Le procédé comprend une étape de fourniture d'un support 1 d'aile avant comprenant une partie supérieure munie de moyens de fixation à une aile avant dudit véhicule et une partie inférieure munie de moyens de fixation à une partie de structure du véhicule, la partie supérieure étant reliée à ladite partie inférieure par une paroi latérale 7, la paroi latérale montrant une face externe 9 et une face interne 11.

Selon une première alternative, le procédé selon l'invention est remarquable en ce qu'il comprend en outre une étape de découpe à plat de la paroi latérale 7 afin de former une patte 13 et un trou 15 dans ladite patte 13, le trou 15 étant adapté pour maintenir une béquille du capot, suivi d'une étape d'emboutissage réalisée du côté de la face externe 9 de la paroi latérale 7 afin de plier ladite patte 13 avec un trou 15 de sorte à ce qu'elle fasse saillie du côté de la face interne 11 de la paroi latérale 7.

Selon une deuxième alternative, le procédé selon l'invention est remarquable en ce qu'il comprend en outre une étape de découpage-pliage d'une patte 13 dans la paroi latérale 7 afin de former une patte 13 pliée suivi d'une étape de formation d'un trou 15 adapté pour maintenir une béquille du capot dans ladite patte 13 pliée, l'étape de découpage-pliage étant réalisée du côté de la face externe 9 de la paroi latérale 7 afin de plier ladite patte 13 de sorte à ce qu'elle fasse saillie du côté de la face interne 11 de la paroi latérale 7. En effet, de manière connue, les pattes pliées peuvent être formées en une seule étape de découpage-pliage dans laquelle un poinçon perforant va en une même opération découper la patte et la plier par enfoncement du poinçon dans le logement de la matrice disposé en regard. Une étape préalable de découpe d'un ajour d'amorce peut être réalisée dans la tôle formant le support 1 d'aile avant, ce qui permet de faciliter l'étape de découpage-pliage.

## Revendications

1. Support (1) d'aile avant d'un véhicule automobile, ledit support (1) comprenant une partie supérieure munie de moyens de fixation (3) à une aile avant dudit véhicule et une partie inférieure munie de moyens de fixation à une partie de structure du véhicule, la partie supérieure étant reliée à ladite partie inférieure par une paroi latérale (7), la paroi latérale (7) montrant une face externe (9) et une face interne (11), ledit support (1) d'aile avant étant **caractérisé en ce que** la paroi latérale (7) montre une patte (13) présentant un trou (15) adapté pour maintenir une béquille du capot, ladite patte (13) faisant saillie du côté de la face interne (11) de la paroi latérale (7).

2. Support (1) d'aile avant selon la revendication 1, **caractérisé en ce que** la patte (13) est une découpe dans la paroi latérale (7) et/ou est venue de matière avec la paroi latérale (7).

3. Support (1) d'aile avant selon la revendication 1 ou 2, **caractérisée en ce que** la patte (13) est une découpe dans la paroi latérale (7) et pliée de façon à montrer une ligne de pli (17) verticale.

4. Support (1) d'aile avant selon la revendication 3, **caractérisé en ce que** la patte (13) montre une extrémité proximale au niveau de la ligne de pli (17) verticale et une extrémité distale (23) libre et **en ce que** l'extrémité proximale a une hauteur supérieure à la hauteur de l'extrémité distale (23) ; de préférence, la distance entre l'extrémité proximale au niveau de la ligne de pli (17) verticale et l'extrémité distale (23) est égale ou inférieure à la hauteur de l'extrémité distale (23).

5. Support (1) d'aile avant selon la revendication 3 ou 4, **caractérisé en ce que** la ligne de pli (17) verticale montre au moins deux bulles (19) de renforcement.

6. Support (1) d'aile avant selon l'une des revendications 3 à 5, **caractérisé en ce que** la patte (13) montre une extrémité proximale au niveau de la ligne de pli (17) verticale et une extrémité distale (23) et **en ce que** le trou (15) adapté pour maintenir une béquille du capot et présenté par la patte (13) est positionné plus proche de l'extrémité proximale au niveau de la ligne de pli (17) verticale que de l'extrémité distale (23).

7. Support (1) d'aile avant selon l'une des revendications 3 à 6, **caractérisé en ce que** la patte (13) montre une extrémité proximale au niveau de la ligne de pli (17) verticale et une extrémité distale (23), **en ce que** le support (1) d'aile avant comprend en outre un moyen de fixation additionnel (5) pour projecteur avant du véhicule et **en ce que** l'extrémité distale (23) est disposée plus près dudit moyen de fixation additionnel (5) que ne l'est l'extrémité proximale ; et/ou **en ce que** la patte (1) forme un angle compris entre 10° et 45° par rapport à la paroi latérale (7).

8. Support (1) d'aile avant selon l'une des revendications 1 à 7, la paroi latérale (7) présentant une ouverture (21) associée à ladite patte (13), le support (1) d'aile étant **caractérisé en ce que** la patte (13) montre une surface inférieure à l'étendue de l'ouverture (21).

9. Véhicule automobile comprenant au moins un capot, ledit capot présentant une face intérieure et une face extérieure, la face intérieure dudit capot montrant une béquille avec une extrémité libre, l'extrémité libre de ladite béquille pouvant se trouver en une position repliée contre la face interne du capot lorsque celui-ci est en position fermée et pouvant se trouver dans une position déployée lorsque le capot est en position ouverte ; ledit véhicule étant **caractérisé en ce qu'**il comprend en outre au moins un support (1) d'aile avant tel que défini selon les revendications 1 à 8.

10. Procédé de fabrication d'un support (1) d'aile avant d'un véhicule automobile selon l'une des revendications 1 à 8, ledit procédé comprenant une étape de fourniture d'un support (1) d'aile avant comprenant une partie supérieure munie de moyens de fixation à une aile avant dudit véhicule et une partie inférieure munie de moyens de fixation à une partie de structure du véhicule, la partie supérieure étant reliée à ladite partie inférieure par une paroi latérale (7), la paroi latérale (7) montrant une face externe (9) et une face interne (11), ledit procédé est **caractérisé en ce qu'**il comprend en outre une étape de découpe à plat de la paroi latérale (7) afin de former une patte (13) et un trou (15) dans ladite patte (13), le trou (15) étant adapté pour maintenir une béquille du capot, suivi d'une étape d'emboutissage réalisée du côté de la face externe (9) de la paroi latérale (7) afin de plier ladite patte (13) avec un trou (15) de sorte à ce qu'elle fasse saillie du côté de la face interne (11) de la paroi latérale (7).

## Patentansprüche

1. Träger (1) für einen vorderen Kotflügel eines Kraftfahrzeugs, wobei der Träger (1) einen oberen Teil, der mit Befestigungsmitteln (3) an einem vorderen Kotflügel des Fahrzeugs versehen ist, und einen unteren Teil, der mit Befestigungsmitteln an einem Strukturteil des Fahrzeugs versehen ist, umfasst, wobei der obere Teil mit dem unteren Teil durch eine Seitenwand (7) verbunden ist, wobei die Seitenwand (7) eine Außenfläche (9) und eine Innenfläche (11) aufweist, wobei der Träger (1) für den vorderen Kotflügel **dadurch gekennzeichnet ist, dass** die Seitenwand (7) einen Lappen (13) mit einem Loch (15) aufweist, das geeignet ist, um einen Ständer der Motorhaube zu halten Von der Innenfläche (11) der Seitenwand (7) vorstehende Latte (13).

2. Frontflügelhalter (1) nach Anspruch 1, **dadurch gekennzeichnet, dass** die Lasche (13) ein Ausschnitt in der Seitenwand (7) ist und/oder einstückig mit der Seitenwand (7) ausgebildet ist.

3. Frontflügelhalter (1) nach Anspruch 1 oder 2, **dadurch gekennzeichnet, dass** die Lasche (13) ein Ausschnitt in der Seitenwand (7) ist und so gefaltet ist, dass sie eine vertikale Faltlinie (17) aufweist.

4. Frontflügelhalter (1) nach Anspruch 3, **dadurch gekennzeichnet, dass** die Lasche (13) ein proximales Ende an der vertikalen Faltlinie (17) und ein freies distales Ende (23) aufweist und dass das proximale Ende eine Höhe aufweist, die größer als die Höhe des distalen Endes (23) ist; vorzugsweise ist der Abstand zwischen dem proximalen Ende an der vertikalen Faltlinie (17) und dem distalen Ende (23) gleich oder kleiner als die Höhe des distalen Endes (23).

5. Frontflügelhalter (1) nach Anspruch 3 oder 4, **dadurch gekennzeichnet, dass** die vertikale Faltlinie (17) mindestens zwei Versteifungsblasen (19) aufweist.

6. Frontflügelhalter (1) nach einem der Ansprüche 3 bis 5, **dadurch gekennzeichnet, dass** die Lasche (13) ein proximales Ende im Bereich der vertikalen Faltlinie (17) und ein distales Ende (23) aufweist und dass das Loch (15), das zum Halten eines Stützbeins der Abdeckung geeignet ist und von der Lasche (13) präsentiert wird, näher am proximalen Ende im Bereich der vertikalen Faltlinie (17) als am distalen Ende (23) angeordnet ist.

7. Frontflügelhalter (1) nach einem der Ansprüche 3 bis 6, **dadurch gekennzeichnet, dass** die Lasche (13) ein proximales Ende an der vertikalen Biegelinie (17) und ein distales Ende (23) aufweist, dass der Frontflügelhalter (1) ferner eine zusätzliche Befestigungseinrichtung (5) für den Frontscheinwerfer des Fahrzeugs aufweist, und dass das distale Ende (23) näher an der zusätzlichen Befestigungseinrichtung (5) angeordnet ist als das proximale Ende, und/oder dass die Lasche (1) einen Winkel zwischen 10 bildet° und 45° zur Seitenwand (7).

8. Frontflügelhalter (1) nach einem der Ansprüche 1 bis 7, wobei die Seitenwand (7) eine Öffnung (21) aufweist, die mit der Lasche (13) verbunden ist, wobei der Flügelhalter (1) **dadurch gekennzeichnet ist, dass** die Lasche (13) eine Fläche aufweist, die kleiner ist als die Ausdehnung der Öffnung (21).

9. Kraftfahrzeug mit mindestens einer Motorhaube, wobei die Motorhaube eine Innenfläche und eine Außenfläche aufweist, wobei die Innenfläche der Motorhaube einen Ständer mit einem freien Ende aufweist, wobei das freie Ende des Ständers in einer zusammengeklappten Position gegen die Innenfläche der Motorhaube liegen kann, wenn sich die Motorhaube in der geschlossenen Position befindet, und in einer ausgeklappten Position sein kann, wenn sich die Motorhaube in der offenen Position befindet; wobei das Fahrzeug ferner **dadurch gekennzeichnet ist, dass** es mindestens einen vorderen Flügelträger (1) nach einem der Ansprüche 1 bis 8 aufweist.

10. Verfahren zur Herstellung einer Vorderflügelhalterung (1) eines Kraftfahrzeugs nach einem der Ansprüche 1 bis 8, wobei das Verfahren einen Schritt des Bereitstellens einer Vorderflügelhalterung (1) umfasst, der einen oberen Abschnitt, der mit Mitteln zur Befestigung an einem vorderen Flügel des Fahrzeugs versehen ist, und einen unteren Abschnitt, der mit Mitteln zur Befestigung an einem Strukturabschnitt des Fahrzeugs versehen ist, umfasst, wobei der obere Abschnitt mit dem unteren Abschnitt durch eine Seitenwand (7) verbunden ist, wobei die Seitenwand (7) eine Außenfläche (9) und eine Innenfläche (11) zeigt, wobei das Verfahren ferner einen Schritt des flachen Schneidens der Seitenwand (7) umfasst Zur Bildung einer Lasche (13) und eines Lochs (15) in der Lasche (13) ist das Loch (15) so ausgelegt, dass es einen Abdeckungsständer hält, gefolgt von einem Prägeschritt, der auf der Seite der Außenfläche (9) der Seitenwand (7) durchgeführt wird, um die Lasche (13) mit einem Loch (15) so zu biegen, dass sie auf der Seite der Innenfläche (11) der Seitenwand (7) vorsteht.

## Claims

1. A support (1) for a front fender of a motor vehicle, the support (1) comprising an upper part provided with fastening means (3) on a front fender of the vehicle and a lower part provided with fastening means on a structural part of the vehicle, the upper part being connected to the lower part by a side wall (7), the side wall (7) having an outer surface (9) and an inner surface (11), the support (1) for the front fender being **characterized in that** the side wall (7) has a tab (13) with a hole (15) adapted to hold a support of the bonnet, the lath (13) projecting from the inner surface (11) of the side wall (7).

2. Front wing holder (1) according to claim 1, **characterized in that** the tab (13) is a cutout in the side wall (7) and/or is formed in one piece with the side wall (7).

3. Front wing holder (1) according to claim 1 or 2, **characterized in that** the tab (13) is a cutout in the side wall (7) and is folded in such a way that it has a vertical fold line (17).

4. Front wing holder (1) according to claim 3, **characterized in that** the tab (13) a proximal end at the vertical fold line (17) and a free distal end (23) and that the proximal end has a height which is greater than the height of the distal end (23); preferably the distance between the proximal end at the vertical fold line (17) and the distal end (23) equal to or less than the height of the distal end (23).

5. Front wing holder (1) according to claim 3 or 4, **characterized in that** the vertical fold line (17) at least two stiffening bubbles (19) having.

6. Front wing holder (1) according to any one of claims 3 to 5, **characterized in that** the tab (13) a proximal end in the region of the vertical fold line (17) and a distal end (23) and that the hole (15), which for holding a support leg of the cover and of the tab (13) is presented, closer to the proximal end in the region of the vertical fold line (17) than at the distal end (23) is arranged.

7. Front wing holder (1) according to one of claims 3 to 6, **characterized in that** the tongue (13) has a proximal end at the vertical bending line (17) and a distal end (23), **in that** the front wing holder (1) furthermore has an additional fastening device (5) for the front headlight of the vehicle, and **in that** the distal end (23) is arranged closer to the additional fastening device (5) than the proximal end, and/or **in that** the tongue (1) forms an angle of between 10° and 45° to the side wall (7).

8. Front wing holder (1) according to any one of claims 1 to 7, wherein the side wall (7) an opening (21) with the tab (13) is connected, wherein the wing holder (1) is **characterized in that** the tab (13) a surface which is smaller than the extent of the opening (21).

9. A motor vehicle having at least one bonnet, the bonnet having an inner surface and an outer surface, the inner surface of the bonnet having a stand with a free end, the free end of the stand being capable of resting against the inner surface of the bonnet in a folded position when the bonnet is in the closed position and being capable of being in an unfolded position when the bonnet is in the open position; the vehicle being further **characterized by** comprising at least one front wing support (1) according to any one of claims 1 to 8.

10. A method of manufacturing a front wing mount (1) of a motor vehicle according to any one of claims 1 to 8, the method comprising a step of providing a front wing mount (1) comprising an upper portion provided with means for attachment to a front wing of the vehicle and a lower portion provided with means for attachment to a structural portion of the vehicle, the upper portion being connected to the lower portion by a side wall (7), the side wall (7) having an outer surface (9) and an inner surface (11), the method further comprising a step of flat cutting the side wall (7) to form a tab (13) and a hole (15) in the tab (13), the hole (15) being adapted to hold a cover post followed by a cover post Embossing step performed on the side of the outer surface (9) of the side wall (7) to bend the tab (13) with a hole (15) so as to protrude on the side of the inner surface (11) of the side wall (7).
